(19) Europäisches Patentamt
European Patent Office
Office européen des brevets

(11) EP 4 277 939 B1

(12) # EUROPEAN PATENT SPECIFICATION

(45) Date of publication and mention of the grant of the patent:
**16.04.2025 Bulletin 2025/16**

(21) Application number: **22701357.0**

(22) Date of filing: **18.01.2022**

(51) International Patent Classification (IPC):
***C08G 12/12** (2006.01)* ***B27N 3/00** (2006.01)*
***B32B 21/02** (2006.01)* ***C09J 161/24** (2006.01)*
***B32B 21/14** (2006.01)* ***B27N 3/02** (2006.01)*
***B27N 3/04** (2006.01)*

(52) Cooperative Patent Classification (CPC):
(C-Sets available)
**C08G 12/12; B27N 3/002; B27N 3/02; B27N 3/04; C09J 161/24;** B32B 21/02; B32B 21/14 (Cont.)

(86) International application number:
**PCT/EP2022/051034**

(87) International publication number:
**WO 2022/152941 (21.07.2022 Gazette 2022/29)**

(54) **METHOD FOR THE PRODUCTION OF UREA-FORMALDEHYDE RESINS, THE RESINS OBTAINED THEREWITH, AND APPLICATIONS OF SAID RESINS**

VERFAHREN ZUR HERSTELLUNG VON HARNSTOFF-FORMALDEHYDHARZEN, DAMIT ERHALTENE HARZE UND ANWENDUNGEN DIESER HARZE

PROCÉDÉ DE PRODUCTION DE RÉSINES D'URÉE-FORMALDÉHYDE, RÉSINES AINSI OBTENUES ET APPLICATIONS DESDITES RÉSINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2021 EP 21382031**

(43) Date of publication of application:
**22.11.2023 Bulletin 2023/47**

(73) Proprietor: **FORESA TECHNOLOGIES, S.L.U.**
**36650 Caldas de Reis Pontevedra (ES)**

(72) Inventor: **OTERO VÁZQUEZ, Luis Alberto**
**36650 Caldas de Reis (PONTEVEDRA) (ES)**

(74) Representative: **Balder IP Law, S.L.**
**Paseo de la Castellana 93**
**5ª planta**
**28046 Madrid (ES)**

(56) References cited:
**US-A1- 2009 171 062**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 277 939 B1

(52) Cooperative Patent Classification (CPC): (Cont.)

C-Sets
**C09J 161/24, C08L 97/02**

## Description

### Field of the Invention

The present invention is related to a method for the production of urea-formaldehyde resins, comprising a methylolation step, a condensation step, which are both carried out at pH values in the acid range, and a final urea addition step, to adjust the desired final molar ratio formaldehyde/urea in the resin; the resins obtained by said method are also within the scope of the present invention.

The resins obtained by the method of the invention are useful in the manufacture of several materials, for example of wood composite boards, such as wood derived boards, fibreboards, natural and/or synthetic, woven or non-woven fibre mats for compression molding and the resulting composites, particleboards, chip boards, oriented strand boards, plywood and paperboards, but also of fibreglass or rock wool insulations. The invention also refers to a material obtained by use of the resin of the invention.

### Background of the Invention

Urea-formaldehyde (UF) resins and adhesives are the most important and probably most used class of amino resin adhesives. Such resins are polymeric condensation products of formaldehyde and urea. The main advantages of UF resins are their initial water solubility, their hardness, nonflammability, good thermal properties, absence of colour in cured polymers, and easy adaptability to a variety of curing conditions ("Wood Adhesives Chemistry and Technology", Vol. 1, New York, 1983, pages 1-58 and pages 59-104).

The UF resins' properties are mainly dependent on the molar ratio of formaldehyde/urea in the individual steps of the method of preparation, as well as in the final resin, the pH and temperature in the individual reaction steps, as well as on the reaction times and kinetics.

The methods known in the state of the art comprise a first reaction of urea with formaldehyde, which results in the formation of addition products, such as methylol compounds; this step is thus often known as methylolation step, but even more generally, it is known as alkaline condensation; this denomination is due to the fact that this step is performed at basic pH values. The second step is a condensation reaction of the methylolureas obtained in the first step, which is generally known as acid condensation, as it is carried out at acidic pH values. In this condensation reaction the methylolureas formed copolymerize by acid catalysis and produce polymers and then highly branched and cured networks *(*Handbook of Adhesive Technology, 2nd Ed., 2003, Taylor & Francis Group, LLC, Chapter 31: Urea-Formaldehyde Adhesives). The alkaline and acidic condensations may be performed each in one step or in two or more sub-steps, but each sub-step, to date, is performed at alkaline or acid pH values, respectively, as indicated.

The main reactions occurring in said standard steps may be represented as follows:

Alkaline condensation/addition reaction: methylolation

- $$NH_2 - CO - NH_2 + CH_2O \leftrightarrow NH_2 - CO - NH - CH_2OH$$

  urea + formaldehyde $\leftrightarrow$ monomethylol urea

- $$NH_2 - CO - NH_2 + 2\ CH_2O \leftrightarrow CH_2OH - NH - CO - NH - CH_2OH$$

  (dimethylol urea, predominant species)

- $$NH_2 - CO - NH_2 + 3\ CH_2O \leftrightarrow CH_2OH - NH - CO - N - (CH_2OH)_2$$

  (trimethylol urea)

Acid condensation

$NH_2$ - CO-NH-$CH_2OH$ + $NH_2$-CO-$NH_2$ ↔ $NH_2CO$ - NH - $CH_2$ - NH - CO- $NH_2$ + $H_2O$

monomethylol urea + urea ↔ Methylene bond

2 $NH_2$- CO-NH-$CH_2OH$ ↔ $NH_2$-CO-NH - $CH_2$ - O- $CH_2$ - NH - CO- $NH_2$ + $H_2O$

Methylene ether bond

These species, having methylene or methylene ether bonds, as well as the methylol compounds, copolymerize to provide a condensed tridimensional structure. An example of typical urea-formaldehyde molecule formed during condensation is:

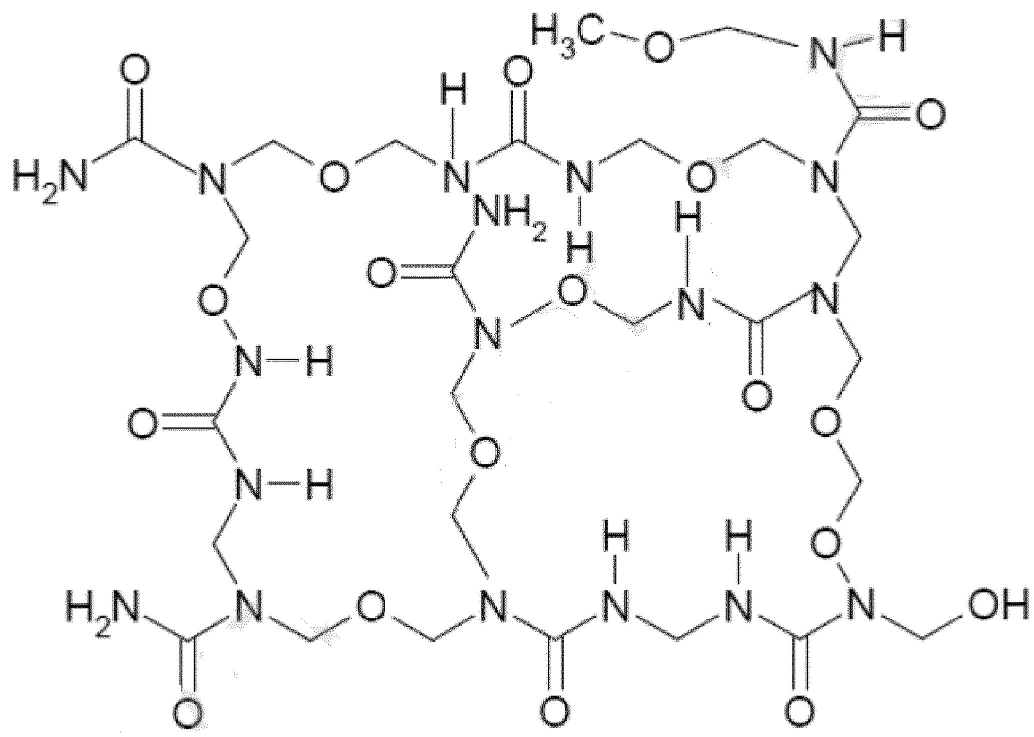

The intended use of the urea-formaldehyde resins determines the viscosity, molar ratio U/F, degree of polymerization, hydrophobicity, solubility, etc., as well as any additives to be incorporated into the final adhesive compositions comprising the UF resin. e.g., the degree of polymerization, and hence the viscosity under comparable conditions, of UF resins for plywood is generally higher than those of UF resins for particleboard.

Extensive studies on methods of preparing urea-formaldehyde resins have been made, in order to determine the relevance of features such as molar ratio of formaldehyde/urea, the pH value and temperature in the individual reaction steps, by modifying features in the steps.

For example, in the publication "Penetration of urea-formaldehyde resins with different formaldehyde/urea mole ratios into softwood tissues," Nuryawan, Arif et al., Wood Science and Technology (2014), 48(5), 889-902, the impact of formaldehyde/urea (F/U) mole ratio on penetration characteristics of urea-formaldehyde (UF) resin into softwood tissues is studied. Different F/U mole ratios of UF resins with different viscosities and two levels of hardener ($NH_4Cl$) for two extreme F/U mole ratios were studied. Standard preparation methods comprising alkaline and acidic condensations were applied.

In the publication "Comparison of UF synthesis by alkaline-acid and strongly acid processes", Ferra, Joao et al., Journal of Applied Polymer Science (2012), 123(3), 1764-1772, two processes for producing urea-formaldehyde (UF) resins are discussed. Although there are important differences between the processes, the methylolation step is always carried out at an alkaline pH.

In the recent publication "Impact of the Synthesis Procedure on Urea-Formaldehyde Resins Prepared by Alkaline-Acid Process", Goncalves, Carolina et al., Industrial & Engineering Chemistry Research (2019), 58(14),

5665-5676, two synthesis procedures for the preparation of urea-formaldehyde (UF) resins, both based on the alkaline-acid process, are studied, in order to better understand the chemical reactions involved. With the results of this study, it is said that it is possible to optimize the process and the properties of particleboards produced by use of such resins.

In the patent publication WO2009065771, titled *"Process for the preparation* of a *condensation resin",* a process at elevated temperature and pressure is explored as an attempt to improve the known methods of preparation.

US20120115994, titled *"Methods for production of aminoplast resins and composite boards",* a novel process for preparation of aminoplast resins is defined; nevertheless, a first alkaline condensation is maintained.

In patent application US5684118 A, with title *"Method of scavenging formaldehyde using a low mole ratio melamine-urea-formaldehyde resin",* the use of a resin synthesis method according to the current state of the art is disclosed: i.e., a method comprising a first alkaline phase and a second moderately acidic phase. Particularly, according to this patent's disclosure, the alkaline condensation is carried out at a molar ratio F / U = 2.5 - 1.9 and pH = 7.2 - 7.8, to subsequently carry out the acid condensation at pH 5.0 - 5 , 7. The method according to the present invention at least differs from this disclosure both in the pH (no alkaline condensation) and in the molar ratio.

In patent application WO2007138364 A1, titled *"Aminoplast resin of high performance for bonding lignocellulosic materials",* it is disclosed that it is possible to start from urea formaldehyde concentrate (UFC), but it is not specified at what pH it is synthesized (it is simply stated that an adjustment must be made at pH = 5.2-6-5). In the embodiments wherein no UFC is used at start, the condensation is carried out at a molar ratio F / U = 3.5-2.3 and pH = 2.0-5.7 (Nevertheless, in all the examples the pH is adjusted to 2.00). This is a completely different process than the process according to the present invention, since the molar ratio of condensation is higher than according to the present invention, and the pH value is much lower than according to the present invention.

In patent application US3816376 , *"Continuous manufacture of amino resin solutions",* the continuous manufacture of urea formaldehyde resins is disclosed, carried out in a system of 3 to 5 reactors in cascade. According to the claims, the method comprises:

a first phase (first reactor) with a ratio F / U = 3.0-2.1 (preferably F / U = 2.5-2.1) and a pH = 5.5-7, 5;

a second phase (second reactor) with a ratio of F / U = 2.6-1.6 (preferably F / U = 2.1 - 1.8) and a pH = 4.0-6.0;

a third phase (third reactor) with a ratio of F / U = 2.2-1.4 (preferably F / U = 2.1-1.5) and a pH = 5.5-7.5; and

finally, the pH is adjusted to a value of 8.

In the patent description, a configuration of five reactors in cascade is described, in which regarding the first one, "alkaline conditions" and pH = 7.3-8.3 are described. In the successive reactors the pH ranges are disclosed to be as follows: second reactor (pH = 6.0-7.0), third reactor (pH = 5.0-6.0), fourth reactor (pH = 4.5-5.0) and fifth reactor (pH = 6.5-7.5). In the (three) examples, five reactors are disclosed, having the following pH ranges: first reactor ("mixing zone" (pH = 7.6-8.0), second reactor (pH 6.5-6.7), third reactor (pH 4.8-5.4), fourth reactor (pH = 4.3-4.6) and fifth reactor (pH = 4.2-4.4). That is, the disclosure refers to a semi-continuous process (cascade reactors) versus a batch process, the former starting at a molar ratio (methylolation process of F / U = 5.0) and acid pH 4.5-5.6, in comparison to the already known methylolation process to molar ratio F / U = 3.0-2.1 (defined in the claims of US 3816376 ) and alkaline pH (see pHs described in the examples and in the description of US 3816376).

Patent application WO2009080798 A1, *"Continuous production of high efficient aqueous amino formaldehyde resin solutions and apparatus",* describes the continuous manufacture of urea formaldehyde resins in a piston flow reactor (continuous plug flow). The claims define a first phase with a F / U ratio = 4.5-0.5 (preferably F / U = 3.7-1.5 and more preferably F / U 3.2-1.6) and a methylolation pH of 4-10, preferably pH = 5.5-8.5. Subsequently there is a second phase (condensation) with pH = 3.0-7.0 (preferably pH 3.0-6.0). Finally, the pH is adjusted to a value of 6-11. The final resin has a molar ratio F / U = 1.5-0.5, preferably F / U = 1.2-0.8 and more preferred F / U = 1.1-0.9. Of the six examples, in the first one, the alkaline methylolation is carried out at pH = 7.0-7.5, followed by acidic condensation at pH = 4.2-4.4 and final pH adjustment at 7.5. In the remaining five examples the condensations are carried out under high acidity conditions (pH = 3.1-3.7). The method according to the present invention differs from this disclosure in the molar F/U ratio and the pH value of the process.

In patent application WO2014150267A1, *"Amino-formaldehyde resins and applications thereof',* the synthesis conditions are the classic alkaline condensation already known in the state of the art.

In patent application US2009171062A1, *"Aminoplast resin of high performance for lignocellulosic materials",* in the claims it is defined that it is possible to start from UFC (Urea Formaldehyde Concentrate), although it is not specified at what pH it is synthesized (but only that an adjustment must be made at pH = 5.2-6-5). Under conditions in which no UFC is used to start with, condensation is carried out at a molar ratio F / U = 3.5-2.3 and pH = 2.0-5.7. This is a completely different process than the process according to the present invention: the pH is adjusted to 2.00, i.e. a pH much lower than

according to the present invention, and the molar ratio of condensation is higher than according to the present invention.

In patent application US20020004554 A1, *"Preparation of aminoplast crosslinked particle dispersion"* the manufacture of a urea formaldehyde, melamine formaldehyde or urea melamine formaldehyde emulsion using a protective colloid is described. The claims mention a pH of 7.8 (alkaline condensation). The pH during the condensation is not mentioned neither in the description nor in the examples.

In patent application US20120115994 A1, *"Methods for production of aminoplast resins and composite boards";* a new process that comprises an alkaline condensation, already known in the state of the art, is disclosed. A methylolation at molar ratio F / U = 4.6 and pH = 7.4 and alkaline condensation at molar ratio F / U = 1.9 and 100°C for twenty minutes at said pH are mentioned in the comparative examples, to subsequently reduce pH to 5.4 and carry out acid condensation. Claims 11 and 12 disclose condensation pHs of 6.5 and 7.5, respectively.

Although the synthesis of urea-formaldehyde resins has been extensively explored, taking into account the ample use of such resins in several industries, it is of interest to develop improvements to the methods known in the state of the art.

## Brief description of the figures

**Figure 1:** reflects a flow diagram corresponding to the production of particleboard (Source: "Wood-Based Panels, An Introduction for Specialists" (2010), Brunel University Press, Thoemen et al, Pages 5-47).

**Figure 2:** reflects a flow diagram corresponding to the production of Medium Density Fibreboard (MDF) (Source: "Wood-Based Panels, An Introduction for Specialists" (2010), Brunel University Press, Thoemen et al, Pages 61-73)

**Figure 3:** Graphic representation of resin stability at 22 °C, plotting the viscosity at 25°C in mPas versus days of storage, for resins obtained according to Examples 1, 2 and 3

**Figure 4:** Graphic representation of resin stability at 30 °C, plotting the viscosity at 25°C in mPas, versus days of storage, for resins obtained according to Examples 1, 2 and 3

## Summary of the invention

The present inventors have now developed a method of producing urea-formaldehyde resins, wherein, against the believe of years, the first step of the method, i.e., the methylolation step, is carried out not in alkaline conditions, but in acid conditions. This feature provides an improvement with regard to known processes. For example, the process is more secure, as it avoids the need of making pH adjustments at high temperatures, which supposes a risk of uncontrolled reactions and gelifications, it provides shorter reaction times, it improves the reactivity of the obtained resins, it improves some physicochemical properties such as the Internal Bond (IB), and provides lower free formaldehyde content in the resins. On the other hand, this new method provides resins with exhibit a stability during storage which is comparable to resins obtained by known methods.

According to a first aspect, the invention relates to a method for the production of urea-formaldehyde resins, characterized in that it comprises:

a) a methylolation step, comprising:

- loading formaldehyde, and, optionally, water, into a reactor equipped with stirring, cooling and heating; wherein formaldehyde refers to formaldehyde, paraformaldehyde and/or UFC (Urea Formaldehyde Concentrate), or a mixture thereof;
- optionally adding a buffer;
- adjusting the pH between 4.5 and 5.5 by adding an alkali;
- adding urea, in an amount such that the molar ratio of formaldehyde/urea is between 5.2 and 4.8;
- carrying out the methylolation reaction, maintaining the pH between 4.5 and 5.6, at a temperature between 70 and 120 °C, in a range of pressure from 0.05 bar to 2.5 bar, during between 5 and 100 minutes;

b) a condensation step, comprising:

- adding urea to the reactor, in an amount such that the molar ratio of formaldehyde/urea in the reactor is between 2.5 and 1.5, preferably between 2.3 and 1.9, adjusting the pH between 5.0 and 5.8;

- heating to 70-120°C, in a range of pressure from 0.05 bar to 2.5 bar, during between 30 and 300 minutes, to carry out the condensation reaction;

- plotting a condensation curve, measuring the viscosity of samples from the reaction mixture, at different time intervals during the condensation reaction, with a viscosimeter at 25°C, until the viscosity corresponding to the aimed molecular weight is reached;

- finalising the condensation by adding an alkali, to obtain a pH between 7.1 and 8.5;

c) a final urea addition step, comprising:

- adding further urea, at a temperature of 70 to 30 °C, during 15 to 120 minutes, maintaining a pH between 7.3 and 8.8, to reach a final molar ratio of formaldehyde/urea between 3.0 and 0.5;

- cooling to a temperature lower than 30 °C;

wherein the pH is adjusted by adding an alkali or an acid as necessary, and is determined by use of a pH meter.

According to a second aspect, the invention refers to a urea-formaldehyde resin obtained by the above-defined method.

A further aspect it the use of the above-indicated urea-formaldehyde resin in the manufacture of materials selected from wood composite boards, such as wood derived boards, fibreboards, natural and/or synthetic, woven or non-woven fibre mats for compression molding and the resulting composites, particleboards, chip boards, oriented strand boards, plywood and paperboards and fibreglass and rock wool insulations.

According to a last aspect, the invention is related to the materials obtained by use of the urea-formaldehyde resin defined above, wherein the materials are selected from wood composite boards, such as wood derived boards, fibreboards, natural and/or synthetic, woven or non-woven fibre mats for compression molding and the resulting composites, particleboards, chip boards, oriented strand boards, plywood and paperboards and fibreglass and rock wool insulations.

## Detailed description of the invention

### Definitions

"Acids" in the frame of the present invention refers to organic and/or inorganic acids. The acid should have a pKa lower than 7; according to a particular embodiment, the pKa will be in the range 2-5. Examples of such organic acids are formic acid, lactic acid, glycolic acid, acetic acid, sulfamic acid; examples of such inorganic acids are sulphuric acid, hydrochloric acid and phosphoric acid. Any other acids known to those skilled in the art, and complying with the above conditions, are understood to be usable to adjust the pH values in the method of the present invention, although not included in the above list.

"Alkali" in the frame of the present invention is a base that dissolves in water, which should have a pKa higher than 7; according to a particular embodiment, the pKa will be in the range 8-15. Hydroxides, amines, carbonates and ammonium are such alkalis. Particular examples thereof are sodium hydroxide, ammonia, monoethanolamine (MEA), diethanolamine (DEA), triethanolamine (TEA), and sodium carbonate. Any other alkalis known to those skilled in the art, and complying with the above conditions, are understood to be usable to adjust the pH values in the method of the present invention, although not included in the above list.

"Buffer" in the frame of the present invention refers to a buffer solution (also known as pH buffer or hydrogen ion buffer), which achieves that the pH of a solution is changed very little, or not at all, when a small amount of strong acid or base is added to it. Buffer solutions are used to keep pH at a nearly constant value. They generally consist of a chemical substance or combination of chemical substances. Particular examples thereof are acid salts, such as sodium acetate or disodium phosphate. Any other buffer substances or solutions known to those skilled in the art are understood to be usable in the method of the present invention, although not explicitly mentioned.

"Reactive matter", in the frame of the present invention, refers to the sum of weight percentages of pure urea and formaldehyde. That is, "reactive matter" is the sum of weight percentages of pure urea, contained in e.g. the pilled or pearled urea used, and the formaldehyde actually contained in the formaldehyde solution used: formaldehyde amount in water is limited to a certain weight percentage, generally to about 55-56 wt. %, but in order to calculate the "reactive matter", the formaldehyde transformed into 100% is used.

"Formaldehyde", in the frame of the present invention, refers to a formaldehyde solution, paraformaldehyde and/or UFC (Urea Formaldehyde Concentrate), or a mixture of the foregoing; the formaldehyde solution is generally a solution with a concentration of 50 to 55 wt. % ($\pm$ 0.5 wt. %) formaldehyde in water.

**Method**

As indicated in the background section of the present patent application, according to the state of the art, the method for producing urea-formaldehyde resins necessarily comprise a first reaction of urea with formaldehyde, to obtain methylol compounds, known as alkaline condensation, as this step is performed at basic pH values. The second step is a condensation reaction of the methylolureas obtained in the first step, known as acid condensation, as it is carried out at acidic pH values, to produce polymers and then highly branched and cured networks.

Surprisingly, the method of producing urea-formaldehyde resins according to the present invention has now been developed, wherein the first step of the method, i.e., the methylolation step, is carried out not in alkaline conditions, but in acid conditions. As noted above, this feature provides an important improvement with regard to known processes. For example, the process is simpler to carry out, as well as more secure, as it avoids the need of making pH adjustments at high temperatures, which supposes a risk of uncontrolled reactions and gelifications, it provides shorter reaction times, it improves the reactivity of the obtained resins, it improves some physicochemical properties such as the Internal Bond (IB), and provides lower free formaldehyde content in the resins. On the other hand, this new method provides resins with exhibit a stability during storage which is comparable to resins obtained by known methods.

Thus, according to a first aspect, the invention relates to a method for the production of urea-formaldehyde resins, characterized in that it comprises:

a) a methylolation step, comprising:

- loading formaldehyde and, optionally, water, into a reactor equipped with stirring, cooling and heating; wherein formaldehyde refers to formaldehyde, paraformaldehyde and/or UFC, or a mixture thereof;
- optionally adding a buffer;
- adjusting the pH between 4.5 and 5.5 by adding an alkali;
- adding urea, in an amount such that the molar ratio of formaldehyde/urea is between 5.2 and 4.8;
- carrying out the methylolation reaction, maintaining the pH between 4.5 and 5.6, at a temperature between 70 and 120 °C, in a range of pressure from 0.05 bar to 2.5 bar, during between 5 and 100 minutes;

b) a condensation step, comprising:

- adding urea to the reactor, in an amount such that the molar ratio of formaldehyde/urea in the reactor is between 2.5 and 1.5, preferably between 2.3 and 1.9, adjusting the pH between 5.0 and 5.8;

- heating to 70-120°C, in a range of pressure from 0.05 bar to 2.5 bar, during between 30 and 300 minutes, to carry out the condensation reaction;

- plotting a condensation curve, measuring the viscosity of samples from the reaction mixture, at different time intervals during the condensation reaction, with a viscosimeter at 25°C, until the viscosity corresponding to the aimed molecular weight is reached;

- finalising the condensation by adding an alkali, to obtain a pH between 7.1 and 8.5;

c) a final urea addition step, comprising:

- adding further urea, at a temperature of 70 to 30 °C, during 15 to 120 minutes, maintaining a pH between 7.3 and 8.8, to reach a final molar ratio of formaldehyde/urea between 3.0 and 0.5;

- cooling to a temperature lower than 30 °C;

wherein the pH is adjusted by adding an alkali or an acid as necessary, and is determined by use of a pH-meter.

Particularly, in the frame of the present invention, the measurements of pH are carried out by use of glass electrodes (the membrane, which is the part sensitive to pH, is made of glass with high chemical resistance). The electrode electrolyte is 3 mol/L of KCl. Calibration is performed with buffer solutions, to adjust the curve following the Nernst equation.

In step a), the formaldehyde loaded into the reactor may either be a formaldehyde solution, paraformaldehyde, and/or UFC (Urea Formaldehyde Concentrate), or a combination of the foregoing. In case formaldehyde solution is used, either alone or in combination with any one of paraformaldehyde or UFC (Urea Formaldehyde Concentrate), a solution with a concentration of 50 to 55 wt. % (± 0.5 wt. %) formaldehyde in water is preferred. In case UFC is used in step a),

evidently not only formaldehyde is added in this methylolation step a), but also urea. In such case, the urea added in the subsequent condensation step b), must be accordingly adapted to the urea already present in the reactor.

The pressure of both the methylolation step a) and condensation step b) may be the same or different, and is generally between 0.05 bar and 2.5 bar. According to particular embodiments, the pressures may, independently one of the other, be between 0.9 and 1.5 bar.

The temperature of both the methylolation step a) and condensation step b) may be the same or different, and is generally between 70 and 120 °C. According to particular embodiments, the temperatures may, independently one of the other, be between 85 and 116 °C, or between 85 and 100 °C.

The above method may be carried out either as a batch process or as a semi-continuous process. If carried out as a batch process, the steps of the method are carried out sequentially in one and the same reactor. Said batch reactor may further be equipped with one or more of jacket and coils (for heat up and cool down), external flux condenser, stirrer, and hoppers. If the method is carried out as a semi-continuous process, two or more reactors are placed sequentially; that is, in each individual reactor of the semi-continuous system one or two of the steps may be carried out. Such a system is also known as continuous stirred tank reactors (CSTRs).

In the following, particular embodiments, for different features of the above method, will be described, which in no manner should be understood to have a restrictive character on the general method. All of the particular embodiments referring to different features may be combined with one or more of the other particular embodiments.

According to a first particular embodiment, the method may further comprise a further step b2), after condensation step b), comprising:

- adding urea to the reactor, in an amount such that the molar ratio of formaldehyde/urea in the reactor is between 1.8 and 1.5, adjusting the pH between 6.0 and 6.8;
- heating to 70-120°C, in a range of pressure from 0.05 bar to 2.5 bar, during between 30 and 300 minutes, to carry out a second condensation reaction;
- plotting a condensation curve, measuring the viscosity of samples from the reaction mixture, measuring the viscosity of samples from the reaction mixture, at different time intervals during the condensation reaction, with a viscosimeter at 25°C, until the viscosity corresponding to the aimed molecular weight is reached;
- finalising the condensation by adding alkali to obtain a pH between 7.1 and 8.5.

In any of the above-defined methods, the buffer refers to a buffer solution or pH buffer, which achieves that the pH of a solution is changed very little, or not at all, when a small amount of strong acid or base is added to it. The buffer may generally consist of a chemical substance or combination of chemical substances. Examples thereof are acid salts. Sodium acetate or disodium phosphate are particular examples of buffers useful in the methods of the present invention. Any other buffer substances or solutions known to those skilled in the art are understood to be usable in the method of the present invention, although not explicitly mentioned.

In any of the above-defined methods, the acid may be organic and/or inorganic acids. The acid should have a pKa lower than 7; according to a particular embodiment, the pKa will be in the range 2-5. Particular examples of such organic acids are formic acid, lactic acid, glycolic acid, acetic acid, sulfamic acid. Examples of such inorganic acids are sulphuric acid, hydrochloric acid and phosphoric acid. Any other acids known to those skilled in the art, and complying with the above conditions, are understood to be usable to adjust the pH values in the method of the present invention, although not included in the above list.

In any of the above-defined methods, the alkali refers to a base that dissolves in water, which should have a pKa higher than 7; according to a particular embodiment, the pKa will be in the range 8-15. Hydroxides, amines, carbonates and ammonium are such alkalis. Particular examples thereof are sodium hydroxide, ammonia, monoethanolamine (MEA), diethanolamine (DEA), triethanolamine (TEA), and sodium carbonate. Any other alkalis known to those skilled in the art, and complying with the above conditions, are understood to be usable to adjust the pH values in the method of the present invention, although not included in the above list.

In any of the above-defined methods, in step a), the methylolation step, the molar ratio of formaldehyde/urea is preferably about 5. The pH in said step a) is preferably between 4.8 and 5.4. The reaction temperature in step a) is preferably between 83 and 95 °C. The reaction time in step a) is preferably between 15 and 30 minutes. Not all of these preferred conditions have to be necessarily simultaneously combined. For example, the reaction temperature may be in the preferred range, and the pH within the general range defined for the method of the invention. Any other combination is also possible, as long as the individual values are within the ranges defined for the invention.

In any of the above-defined methods, in step c), the final urea addition step, the urea addition may be performed at once, i.e. in one step, or may alternatively be performed in two or more sub-steps. According to a particular embodiment,

the final molar ratio of formaldehyde/urea in step c) is between 2.1 and 0.7.

The obtained urea-formaldehyde resin may further be subjected to a distillation step, in order to reduce the water content therein and thus increase the reactive matter of the resin. According to a preferred embodiment, in the present method a formaldehyde solution having a concentration of 55 wt.% ± 0.5 wt.% is used; in such case, the method may be carried out without such a distillation step, as it is not needed in order to achieve a high reactive matter concentration in the final resin. The avoidance of such a distillation step allows to reduce the overall energy consumption and further increases the safety of the process.

## Urea-formaldehyde resins

According to a second object of the invention, an urea-formaldehyde resin, obtained by any of the above defined methods, is provided.

According to a particular embodiment, said urea-formaldehyde resin comprises:

20.0-40.0 wt. % formaldehyde;

30.0-60.0 wt. % urea; and

0.00-1.00 wt. % buffer.

A further particular embodiment provides an urea-formaldehyde resin which complies with at least one of the following:

24.0-36.5 wt. % formaldehyde;

33.5-55 wt. % urea; and

0.05-0.4 wt. % buffer.

According to a further particular embodiment, any of the above defined urea-formaldehyde resins according to the invention shows the following features:

30.0-86.0 wt. % reactive matter;

40-75 wt. % solids content;

a formaldehyde/urea molar ratio between 3.00 and 0.50;

a formaldehyde/$NH_2$ molar ratio between 1.50 and 0.25;

a pH between 6.5 and 9.5.

According to a further particular embodiment, said urea-formaldehyde resin complies with at least one of the following:

69.4-83 wt. % reactive matter;

53-65 wt. % solids content;

a formaldehyde/urea molar ratio between 2.10 and 0.70;

a formaldehyde/$NH_2$ molar ratio between 1.05 and 0.35;

a pH between 7.5 and 8.5.

## Uses and materials

A further aspect of the invention is the use of any of the urea-formaldehyde resins defined above, in the

manufacture of materials selected from wood composite boards, such as wood derived boards, fibreboards, natural and/or synthetic, woven or non-woven fibre mats for compression molding and the resulting composites, particleboards, chip boards, oriented strand boards, plywood and paperboards and fibreglass and rock wool insulations. According to a particular embodiment, the material is selected from plywood, fibreboard and particleboard.

Another aspect of the invention are the materials obtained by use of any of the urea-formaldehyde resins defined above, wherein the materials are selected from wood composite boards, such as wood derived boards, fibreboards, natural and/or synthetic, woven or non-woven fibre mats for compression molding and the resulting composites, particleboards, chip boards, oriented strand boards, plywood and paperboards and fibreglass and rock wool insulations. According to a particular embodiment, the material is selected from plywood, fibreboard and particleboard.

Plywood

The process for manufacturing plywood as a coated material may correspond to a process typically used in the art, with the exception that an adhesive solution, comprising an urea-formaldehyde resin according to the present invention, which is applied to wood veneers, by curtain coating, in amounts as described herein.

A plywood may be obtained from an uneven number of wood veneers, and the number of wood veneers, as well as the nature of the wood, will vary depending on the wishes for the final products. As a mode of example, the number of wood veneers may vary from 3 to 29, in particular from 5 to 25, and more in particular from 7 to 23, and the thickness of the wood veneers may be from 0.3 to 3 mm, in particular from 0.5 to 2.5 mm, more particularly from 1 to 2 mm.

A process for manufacturing plywood may generally comprise placing a first wood veneer in a conveyor belt, with the wood grain in a first direction, to allow the wood veneer to pass through a curtain of an adhesive solution; placing a subsequent wood veneer with the wood grain of the wood in the cross direction with respect to said first direction. Subsequent wood veneers are placed alternatively with the wood grain in the first direction and the wood grain in the cross direction. The wood veneers are then placed on top of each other to provide a stack of wood veneers, wherein adjacent wood veneers have the wood grain in cross directions and with the surface of the wood veneer which is free of adhesive solution being placed on top of the surface containing adhesive of a previous wood veneer, until the last wood veneer is to be placed, to obtain a stack of wood veneers of desired thickness. The last wood veneer to be placed on the stack is free of any adhesive.

The stack of wood veneers is typically pressed at a temperature from 80 to 160°C, in particular from 90 to 150°C and more particularly from 100 to 140°C, and at a pressure from 0,4 to 2,0 MPa for a length of time from 0,4 to 3 minutes per mm of total thickness of the curtain coated substrate being pressed.

The stack of wood veneers may be directly submitted to the above conditions, or may have been previously submitted to a previous compression step, wherein the stack of veneers is subjected to a pressure of from 0,3 to 1 MPa, for 2 to 30 minutes, at room temperature (e.g. at a temperature from 16 to 26 °C). Such previous compression step may advantageously prevent drying out of the resin and improve adhesion, particularly if compression cannot be performed immediately after stacking.

A plywood obtainable or obtained by processes as described herein advantageously displays good bonding quality. In particular, it has been found that methods as described herein can produce plywood with aminoplast resin-based adhesive, which have good bonding properties, with a low amount of adhesive being used.

In particular, a plywood may be obtained, wherein wood veneers are adhered by an adhesive solution as described herein, formulated with an urea formaldehyde resin according to the invention, organic and/or inorganic filler and water, as known in the state of the art, interposed between the wood veneers, and applied to one of the surfaces of the wood veneers to an amount from 130 to 250 g/$m^2$; said plywood achieves a class I, class II or class III bonding quality rating, according to *EN 314-1:2004 and to EN 314-2: 1993 (confirmed in 2013) European Standards* and has an E-1 formaldehyde emissions rating according to *EN 636:2012+A1:2015 European Standard or is Title VI compliant according to the Toxic Substances Control Act (TSCA) of the United States,* or has a three star rating or four star rating according to the *Japanese Industrial Standard JIS 1460:2015).*

Particleboard

The production of particleboard may be performed according to processes known in the state or the art. A flow diagram corresponding to a typical production process is shown in Figure 1. Further details regarding the process may be found, for example, in "Wood-Based Panels, An Introduction for Specialists" (2010), Brunel University Press, Thoemen et al, Pages 5-47.

Medium Density Fibreboard (MDF)

The production of MDF may be performed according to processes known in the state or the art. A flow diagram

corresponding to a typical production process is shown in Figure 2. Further details regarding the process may be found, for example, in "Wood-Based Panels, An Introduction for Specialists" (2010), Brunel University Press, Thoemen et al, Pages 61-73).

In the following, the invention will be further illustrated by examples and experimental results. They should in no way be construed as limiting the scope of the invention, but merely as an illustration of the invention.

## EXAMPLES

## PROCEDURES

In the following, various procedures used throughout the examples, or to determine the characteristics of the final resins, are described.

### Intermediate Viscosity

During the preparation of UF resins, particularly during the polymerization step, generally known as acid condensation, it is usual to determine the degree of condensation of the resin at different times, by determining the viscosity, in order to decide when to finalize the condensation, in dependence of the desired characteristics in the final resin. The viscosity of samples is determined by use of a Hoeppler viscometer, and the measurements are used to plot a condensation curve, providing relevant information on the course of the condensation.

The viscosity of glues and resins as is determined as a function of the time of a sphere needs to fall inside a vertical cylindrical tube, which contains the sample to be tested.

Material

- Hoeppler Viscometer
- Scale thermometer 0 to 100°C, with precision ± 1°C
- Refrigerating bath
- Stopwatch

Process

The sample is adjusted to the indicated temperature, in this case 25°C, and the viscometer internal tube is filled with it.

The appropriate sphere is introduced (depending on the required viscosity range) and the time elapsed, while the sphere falls between two reference marks separated by a certain distance, is measured with a stopwatch.

Examples of spheres usually used are indicated in Table 1:

Table 1

| | SPHERE | | |
|---|---|---|---|
| | **N° 1** | **N° 2** | **N° 3** |
| Range of measurement, cP | 2 - 200 | 10 - 1.000 | 50 - 5.000 |
| **Material** | Glass | Glass | Steel |
| **Diameter, mm** | 13.5 | 15.5 | 15.0 |
| **Mass, gr.** | 2.82 | 4.45 | 14.40 |
| **FACTOR** | **1.0** | **7.5** | **10.0** |

The result, expressed as viscosity in centipoise (cP) at the temperature at which the measurement was made, is obtained by multiplying the value of the reading on the stopwatch (in seconds) by the factor corresponding to the sphere

used, as indicated in Table 1.

**Final viscosity**

The final viscosity of a prepared resin is determined by use of a rotational viscometer and is indicated in centipoise.

Material

- Type LV rotational viscometer, with a speed / spindle combination that provides a percentage of scale between 20 and 80%
- Scale thermometer 0 to 100°C, with precision ± 0.1°C
- Thermostated baths to cool or heat

Process

The temperature of the aminoplast glue is adjusted to the value indicated in the corresponding technical specifications (in the frame of the present invention the viscosity is measured at the most common temperature of 25°C, although the test can be performed at any other temperature) with an accuracy of ± 0.5 °C.

A speed / spindle combination is selected so that the viscosity value of the sample to be tested is in a scale percentage of between 20 and 80% (In Table 2 presented below, the full scale provided by different speed and spindle combinations are summarized).

The selected spindle is screwed to the head and immersed in the sample, so that it is completely centered in the container, and so that the level of the sample coincides with the immersion mark on the spindle.

The viscometer is started and the value indicated on the display is noted once the reading has stabilized.

Table 2

| | | SPINDLE | | | |
|---|---|---|---|---|---|
| | | Nº 1 | Nº 2 | Nº 3 | Nº 4 |
| SPEED (R.P.M) | 0,3 | 20.000 cP | 100.000 cP | 400.000 cP | 2.000.000 cP |
| | 0,6 | 10.000 cP | 50.000 cP | 200.000 cP | 1.000.000 cP |
| | 1,5 | 4.000 cP | 20.000 cP | 80.000 cP | 400.000 cP |
| | 3,0 | 2.000 cP | 10.000 cP | 40.000 cP | 200.000 cP |
| | 6,0 | 1.000 cP | 5.000 cP | 20.000 cP | 100.000 cP |
| | 12 | 500 cP | 2.500 cP | 10.000 cP | 50.000 cP |
| | 30 | 200 cP | 1.000 cP | 4.000 cP | 20.000 cP |
| | 60 | 100 cP | 500 cP | 2.000 cP | 10.000 cP |

The result is expressed as viscosity in centipoise (cP) at the temperature at which the test was performed.

**Density**

The density (weight of a resin sample in a volume unit) of the obtained resins was determined.

Material:

- Densimeter of different scales: 0.900 - 1.000, 1.000 - 1.100, 1.100 - 1.200, 1.200 - 1.300 and 1.300 - 1.400 $g/cm^3$
- Thermometer with precision ± 0.1°C
- Cooling water bath or steam bath
- 250 mL test tube

Process:

The sample is adjusted to the temperature indicated in the corresponding technical specifications (the most common is to measure the density at 25°C, although the test can be carried out at any other temperature) with an accuracy of ± 0.5°C.
The sample is transferred to the test tube and the densimeter is immersed.
By reading on the densimeter of the division that makes up with the surface of the liquid, the value of the density is obtained, expressed in g / $cm^3$ and specifying the temperature at which the test was performed.

**Determination of pH**

The pH of the resins, both final and during the preparation, is determined by use of a pH-meter. Particularly, the measurement of pH is carried out with glass electrodes (the membrane, which is the part sensitive to pH, is made of glass with high chemical resistance). The electrode electrolyte is 3 mol/L of KCI. Calibration is performed with buffer solutions, to adjust the curve following the Nernst equation.

Material:

- pH meter
- Electrode for pH measurement, with range from 0 to 14 units
- Thermometer with precision ± 1°C
- Cooling water bath or steam bath

Process

The sample is adjusted to the temperature indicated in the corresponding technical specifications (the most common is to measure the pH at 25°C, although the test can be carried out at any other temperature) with an accuracy of ± 1°C. If the pH meter lacks a probe to measure the temperature, the value to which the sample has been adjusted is entered manually (the equipment that incorporates a temperature probe performs an automatic compensation of the pH value under the given conditions).
The electrode is immersed in the sample and the pH measurement key is pressed.
Once the reading is stabilized, the pH value is taken.

**Solids content**

In the following the method for determining the amount of solids contained in the final resin is described.

Material

- Analytical balance (precision 0.1 mg)
- Aluminum plates 40-50 mm in diameter and 10-20 mm in height

- 5 mL graduated pipette
- Tweezers
- Air circulation stove with the capacity to maintain the temperature at 105 ± 1 °C
- Desiccator with silica gel

Procedure

Three plates are dried in the oven for a minimum of 15 minutes at 105 ± 1 °C, cooled in a desiccator and tared.

A resin sample is weighed on each one of the plates (sufficient quantity so that each sample contains around 0.45 grams of solid resin).

5 ml of distilled water are added to each sample of resin placed on the plates and each one is gently shaken until its content is well homogenized, preventing projections from occurring.

The dishes are placed on the stove and kept for three hours at 105 ± 1°C.

After this time, the dishes are allowed to cool in a desiccator and are weighed.

The content of solids in the resin are calculates as follows:

$$\text{Solids content (wt. \%)} = \frac{A \times 100}{B}$$

wherein:

A: dry resin weight (gr)
B: Initial sample weight (gr)

**Gel Time**

Herein the method to determine the time it takes for a resin to gel at 100 °C, with the addition of a catalyst, is described.

Reactives

- Catalyst: Ammonium sulphate solution 25% ($SO_4\ (NH_4)_2$)

Material

- 100 mL beaker
- Glass stirring rod
- Triple beam balance (precision 0,1 g)
- 2 mL graduated pipette
- 2 mL plastic syringe
- Assembly for determining gel time consisting of:
    - 1000 mL spherical flask with three ground-glass nozzles 29/32
    - Coolant with frosted 29/32
    - Heating blanket for 1000 mL spherical flasks
    - 29/32 rubber or Teflon grinding plugs with 16 mm diameter hole for test tube insertion

- Pyrex glass test tube with flange and dimensions: 16 mm external diameter, 160 mm length and 1.2 mm wall thickness.
- Fine stainless-steel wire with a curved end
- Stopwatch

Process

100 grams of the resin to be tested are weighed in a beaker and 2 mL of ammonium sulphate solution are added. It is stirred well with the glass rod until a homogeneous mixture is obtained.

With the syringe, 1.5 mL of the previous mixture is taken and transferred to a test tube, taking care that there are no drops adhering to the walls. The stainless wire is placed inside the tube to stir. The test tube is inserted through the stopper of one of the flask's mouths up to the rim, so that the lower end of the tube is submerged in the boiling water that contains the flask, and the timer is started. The mixture inside the tube is gently agitated with the curved end of the fine wire.

The gel time, measured with a stopwatch and expressed in seconds, is the time elapsed from the time the tube is introduced into the water bath until the resin hardens.

**Free formaldehyde**

The content of free formaldehyde in the final resins was measured following the norm UNE EN 1243.

**Cloud Point (turbidity)**

A sample of the resin is taken out of the reactor into a 250mL beaker. The beaker is put in a cold bath, and stirred to cool down. The temperature (°C) at which the resin changes from clear to milky is the Cloud Point.

**EXAMPLE** 1: **Comparative example (Alkaline condensation at a F/U molar ratio of 2.00)**

494.4 g of formaldehyde 55 wt.% (temperature 60°C; pH 3.4) are loaded. The pH is adjusted to 7.0-7.6 with NaOH 25% (w/w). 272 g of urea are added. An exotherm raises the temperature up to 86°C.

The alkaline condensation is continued at a temperature of about 85°C, until the samples precipitate at a temperature of 45° ("cloud point"). After 25 minutes, the alkaline condensation is finalized by adding formic acid 20% (w/w), to reduce to a pH within a range of 5.0-5.6. At that time, the resin in the reactor changes from transparent to opalescent. It is condensed at a temperature of 90° and pH 5.2 until a viscosity at 25°C of 1400 cP is reached. Then the pH is adjusted to a value within a range of 6.0-6.8, and the reaction temperature is reduced to 80°C. 90.9 g of urea are added. Slight heating is applied, to maintain the temperature at about 80°C, and the condensation is continued until a viscosity at 25°C of 1100 cP is reached. Once this viscosity has been reached, NaOH 25% (w/w) is added to adjust to a pH within a range of 8,0-8,5. It is cooled to 70°C, and 140.9 g of urea are added, reducing the temperature to 56°C. It is maintained for 15 minutes. The pH is adjusted to a value within a range of 7.5-8.5. It is cooled to 25°C. The obtained resin is analysed after 24 hours; the results obtained are shown in Table 3:

**Table 3**

| | |
|---|---|
| Viscosity at 25° C, cP | 391 |
| Density at 25°C, g/cm3 | 1.282 |
| pH at 25°C | 8.1 |
| Free formaldehyde, % | 0.08 |
| Gel time, sec. | 56 |
| Solids content, % | 65.6 |

**EXAMPLE 2: Comparative example (Alkaline condensation at an F/U molar ratio=5.00)**

494.4 g of formaldehyde 55 wt.% (temperature 60°C; pH 3.4) are loaded. The pH is adjusted with NaOH 25% (w/w) to a value within the range 7.0-7.5. 108.7 g of urea are added. An exotherm raises the temperature up to 99°C. It is cooled to 80°C and the pH is again adjusted to 7.0-7.5.

163.3 g of urea are added. The alkaline condensation is continued to a temperature of about 85°C, until the samples precipitate at a temperature of 45°C (cloud point). After 25 minutes, the alkaline condensation is finalised by adding formic acid 20% (w/w), to reduce the pH to a value within the range of 5.0-5.6. Then the resin in the reactor goes from

transparent to opalescent. It is condensed at a temperature of 90° and pH 5,2, until a viscosity of 1400 cP is reached. At that time, the pH is adjusted within a range of 6.0-6.8 and the reaction temperature is reduced to 80°C. 90.9 g of urea are added. Slight heating is applied, to keep the temperature at 80°C, and the condensation is continued until a viscosity at 25°C of 1100 cP is reached. Once this viscosity has been reached, NaOH 25% (w/w) is added to adjust the pH within a range of 8.0-8.5. It is cooled to 70°C, and 140.9 g of urea are added, reducing the temperature to 56°C. It is maintained for 15 minutes. The pH is adjusted within a range of 7.5-8.5. It is cooled to 25°C. The obtained resin is analysed after 24 hours; the results obtained are shown in Table 4:

**Table 4**

| | |
|---|---|
| Viscosity at 25°, cP | 394 |
| Density at 25°C, g/cm3 | 1.282 |
| pH at 25°C | 8.1 |
| Free formaldehyde, % | 0.08 |
| Gel time, sec. | 58 |
| Solids content, % | 65.8 |

**EXAMPLE 3. Preparation of a resin according to the present invention**

494.4 g of formaldehyde 55 wt.% (temperature 60°C; pH 3.4) are loaded. The pH is adjusted with NaOH 25% (w/w) to a value within the range 4.5-5.5. 108.7 g of urea are added. It is heated to 99°C and maintained for 15 minutes. It is cooled to 80°C.

163.3 g of urea are added. It is condensed at a temperature of 90° and pH 5.0, until a viscosity at 25°C of 1400 cP is reached. Then the pH is adjusted to a range of 6.4-6.8 and the temperature is reduced to 80°C. 90.9 g of urea are added. Slight heating is applied to keep the temperature at 80°C, and the condensation is continued until a viscosity at 25°C of 1100 cP is reached. Once this viscosity has been reached, NaOH 25% (w/w) is added to adjust the pH within a range of 8.0-8.5. It is cooled to 70°C, and 140.9 g of urea are added, reducing the temperature to 56°C. It is maintained for 15 minutes. The pH is adjusted within a range of 7.5-8.5. It is cooled to 25°C. The obtained resin is analysed after 24 hours; the results obtained are shown in Table 5:

**Table 5**

| | |
|---|---|
| Viscosity at 25°, cP | 410 |
| Density at 25°C, g/cm3 | 1.282 |
| pH at 25°C | 8 |
| Free formaldehyde, % UNE EN 1243 | 0.08 |
| Gel time, sec. | 47 |
| Solids content, % | 65 |

**EXAMPLE 4: Manufacture of particle boards**

Particle boards were manufactured by use of the resins of above-indicated EXAMPLES 1, 2 and 3.

A standard process for manufacturing particleboards was used, such as that shown in Figure 1. The particular conditions applied in such manufacture were the following:

Dry glue on dry wood: outer layer: 7 %; inner layer: 6 %

Dry paraffin emulsion on dry wood: 0.60% outer layer and 0.40% inner layer

Press temperature: 200°C.

Press time: 145 seconds

The results are shown in Table 6:

**Table 6**

| PARAMETER | Example 1 (Comparative) | Example 2 (Comparative) | Example 3 (Invention) |
|---|---|---|---|
| Thickness, mm | 15.65 | 15.55 | 15.6 |
| Density, Kg/$m^3$ | 656 | 648 | 651 |
| Internal Bond, N/mm2. UNE EN 312 | 0.65 | 0.62 | 0.66 |
| Water absorption, %. UNE EN 312 | 18.1 | 22.8 | 20.3 |
| Swelling in water, %. UNE EN 312 | 3.9 | 4.3 | 4.1 |
| Formaldehyde content (at 6,5% humidity) mg/100 g board. UNE EN 12460-5 | 8.6 | 8.1 | 8.2 |

**EXAMPLE 5: Determination of stability of comparative and inventive resins**

The stability of the resins of EXAMPLES 1, 2 and 3, at two different storage temperatures: 22 and 30°C, was determined. The evolution of viscosity, measured at 25°C, and expressed in mPa.s (cP), for both temperatures, are shown, respectively, in Figure 3 and Figure 4.

**EXAMPLE 6: Reactivity with catalysts (gel time) of comparative and inventive resins**

The gel time, which is representative of the reactivity with catalysts, is determined by measuring the time it takes for a resin to gel at 100 °C, with the addition of a catalyst, according to the procedure described above.
The reactivities of the resins of EXAMPLES 1, 2 and 3 with two different catalysts were determined. The results are shown in Table 7:

**Table 7**

| Gel time, seconds | EXAMPLE 1 | EXAMPLE 2 | EXAMPLE 3 |
|---|---|---|---|
| Ammonium nitrate, 25% | 64 | 68 | 55 |
| Ammonium sulphate, 25% | 56 | 58 | 57 |

**EXAMPLE 7: Manufacture of fibreboard with comparative and inventive resins:**

Fibreboards were manufactured by use of the resins of EXAMPLES 1, 2 and 3 above.
A standard process for manufacturing fibreboards was used, such as that shown in Figure 2. The particular conditions applied in such manufacture were the following:
Conditions of the boards:

Dry glue on dry wood: 8 %

Dry paraffin emulsion on dry wood: 1.00%

Press temperature: 200°C.

Press time: 135 seconds

The results are shown in Table 8:

**Table 8**

| PARAMETER | Example 1 | Example 2 | Example 3 |
|---|---|---|---|
| Thickness, mm | 17.65 | 17.65 | 17.55 |

(continued)

| PARAMETER | Example 1 | Example 2 | Example 3 |
|---|---|---|---|
| Density, Kg/m$^3$ | 753 | 750 | 748 |
| Internal Bond, N/mm2. UNE EN 622 | **0.63** | **0.59** | **0.69** |
| Water absorption, %. UNE EN 622 | 22.0 | 22.8 | 22.1 |
| Swelling in water, %. UNE EN 622 | 4.3 | 4.8 | 4.2 |
| Formaldehyde content (at 6.5% humidity) mg/100 g board. UNE EN 12460-5 | 7.2 | 7.3 | 6.9 |

**EXAMPLE 8: Manufacture of plywood.**

Plywood was manufactured by using the resins of Example 2 and Example 3.

The resin compositions were formulated as follows:

100 kg resin

20 kg wheat flour

3 kg ammonium nitrate

9.5 kg water.

Plywood of 12 mm thickness was produced, and the results according to standard EN-314 are shown in Table 9 below:

**Table 9**

| Resin | **Press temperature** | **Press time** | **Resistance N/mm2** | **Failure** |
|---|---|---|---|---|
| Example 2 | 100°C | 7 minutes | 1.01 | 61% |
| Example 3 | 100°C | 7 minutes | 1.06 | 74% |

**EXAMPLE 9: Preparation of a resin according to the present invention**

924.0 g of formaldehyde 55 wt.% (temperature 58°C; pH 3.4) and 3.5 grams of sodium acetate are loaded into the reactor; the pH of condensation is then adjusted to about 5.5 with NaOH 25% (w/w). 203.3 g of urea are added to the previous mixture. The mixture is heated to 99°C and maintained for 15 minutes; once said time has elapsed, 9.47 g of water are added and the mixture is cooled to 80°C.

Once 80°C have been reached, 304.90 g of urea are added, the pH is adjusted to 5.6 with NaOH 25% (w/w). It is heated to 90°C and this temperature and a pH of about 5.6 are maintained during condensation. Once a viscosity of 450 cP, measured at 25°C, has been reached, the resin is cooled to 80°C and the pH is adjusted to about 5.8 with NaOH 25% (w/w). 89.7 g of urea are added. A slight heating is applied to keep the temperature at 80°C, and condensation is continued until a viscosity of 750 cP at 25°C is reached. Once this desired viscosity has been reached, NaOH 25% (w/w) is added to adjust the pH to about 7.3. It is cooled to about 70°C, and 215.2 g of urea are added, reducing the temperature to about 56°C. It is maintained for 15 minutes at said temperature. Finally, the pH is adjusted to a value within a range of 7.5-8.5. It is cooled to 25°C. The obtained resin is analysed after 24 hours; the results are shown in Table 10:

**Table 10**

| | |
|---|---|
| Viscosity at 25°, cP | 255 |
| Density at 25°C, g/cm3 | 1.277 |
| pH at 25°C | 8.1 |
| Free formaldehyde, % | 0.38 |
| Gel time, sec. | 43 |

(continued)

| | |
|---|---|
| Solids content, % | 63.9 |

## Claims

1. Method for the production of urea-formaldehyde resins, **characterized in that** it comprises:

    a) a methylolation step, comprising:

    - loading formaldehyde and, optionally, water, into a reactor equipped with stirring, cooling and heating; wherein formaldehyde refers to formaldehyde, paraformaldehyde and/or UFC (Urea Formaldehyde Concentrate), or a mixture thereof;
    - adjusting the pH between 4.5 and 5.5;
    - adding urea, in an amount such that the molar ratio of formaldehyde/urea is between 5.2 and 4.8;
    - carrying out the methylolation reaction, maintaining the pH between 4.5 and 5.6, at a temperature between 70 and 120 °C, during between 5 and 100 minutes;

    b) a condensation step, comprising:

    - adding urea to the reactor, in an amount such that the molar ratio of formaldehyde/urea in the reactor is between 2.5 and 1.5, adjusting the pH between 5.0 and 5.8;
    - heating to 70-120°C, in a range of pressure from 0.05 bar to 2.5 bar, during between 30 and 300 minutes, to carry out the condensation reaction;
    - plotting a condensation curve, measuring the viscosity of samples from the reaction mixture, at different time intervals during the condensation reaction, with a viscosimeter at 25°C, until the viscosity corresponding to the aimed molecular weight is reached;
    - finalising the condensation by adding an alkali, to obtain a pH between 7.1 and 8.5;

    c) a final urea addition step, comprising:

    - adding further urea, at a temperature of 70 to 30 °C, during 15 to 120 minutes, maintaining a pH between 7.3 and 8.8, to reach a final molar ratio of formaldehyde/urea between 3 and 0.5;
    - cooling to a temperature lower than 30 °C;

    wherein the pH is adjusted by adding an alkali or an acid as necessary, and is determined by use of a pH-meter.

2. Method for the production of urea-formaldehyde resins according to any one of claim 1, **characterized in that** in condensation step b), urea is added in an amount such that the molar ratio of formaldehyde/urea in the reactor is between 2.3 and 1.9.

3. Method for the production of urea-formaldehyde resins according to any one of claims 1 and 2, **characterized in that** methylolation step a) comprises adding a buffer.

4. Method according to any one of claims 1 to 3, comprising a second condensation step b2), after condensation step b), comprising:

    - adding urea to the reactor, in an amount such that the molar ratio of formaldehyde/urea in the reactor is between 1.8 and 1.5, adjusting the pH between 6.0 and 6.8;
    - heating to 70-120 °C, in a range of pressure from 0.05 bar to 2.5 bar, during between 30 and 300 minutes, to carry out a second condensation reaction;
    - plotting a condensation curve, measuring the viscosity of samples from the reaction mixture, measuring the viscosity of samples from the reaction mixture, at different time intervals during the condensation reaction, with a viscosimeter at 25°C, until the viscosity corresponding to the aimed molecular weight is reached;
    - finalising the condensation by adding alkali to obtain a pH between 7.1 and 8.5.

5. Method according to any one of claims 1 to 4, wherein the buffer is an acid salt.

6. Method according to claim 5, wherein the acid salt is selected from sodium acetate or disodium phosphate.

7. Method according to any one of claims 1 to 6, wherein the acid is an organic or inorganic acid having a pKa lower than 7.

8. Method according to any one of claims 1 to 7, wherein the acid is an organic or inorganic acid having a pKa in the range 2-5.

9. Method according to any one of claims 7 and 8, wherein the acid is selected from formic acid, lactic acid, glycolic acid, acetic acid, sulfamic acid, sulphuric acid, hydrochloric acid and phosphoric acid.

10. Method according to any one of claims 1 to 9, wherein the alkali is an organic or inorganic base having a pKa higher than 7.

11. Method according to any one of claims 1 to 10, wherein the alkali is an organic or inorganic base having a pKa in the range 8-15.

12. Method according to any one of claims 10 and 11, wherein the alkali is selected from sodium hydroxide, ammonia, monoethanolamine (MEA), diethanolamine (DEA), triethanolamine (TEA), and sodium carbonate.

13. Urea-formaldehyde resin obtained by the method of claims 1 to 12.

14. Urea-formaldehyde resin according to claim 13, **characterized in that** it comprises:

20.0-40.0 wt. %, preferably 24.0-36.5 wt. %, formaldehyde;
30.0-60.0 wt. %, preferably 33.5-55 wt. %, urea; and
0.00-1.00 wt. %, preferably 0.05-0.4 wt. %, buffer.

15. Urea-formaldehyde resin according to any one of claims 13 and 14, **characterized by** the following features:

30.0-86.0 wt. %, preferably 69.4-83 wt. % reactive matter, wherein reactive matter refers to the sum of weight percentages of pure urea and formaldehyde;
40-75 wt. %, preferably 53-65 wt. %, solids content;
a formaldehyde/urea molar ratio between 3.00 and 0.50, preferably between 2.10 and 0.70;
a formaldehyde/$NH_2$ molar ratio between 1.50 and 0.25, preferably between 1.05 and 0.35;
a pH between 6.5 and 9.5, preferably between 7.5 and 8.5, wherein the pH is determined by use of a pH-meter.

16. Use of the urea-formaldehyde resin defined in claims 13 to 15 in the manufacture of materials selected from wood composite boards, such as wood derived boards, fibreboards, natural and/or synthetic, woven or non-woven fibre mats for compression molding and the resulting composites, particleboards, chip boards, oriented strand boards, plywood and paperboards and fibreglass and rock wool insulations.

17. Use according to claim 16, wherein the material is selected from plywood, fibreboard and particleboard.

18. Materials obtained by use of the urea-formaldehyde resin defined in claims 13 to 15, wherein the materials are selected from wood composite boards, such as wood derived boards, fibreboards, natural and/or synthetic, woven or non-woven fibre mats for compression molding and the resulting composites, particleboards, chip boards, oriented strand boards, plywood and paperboards and fibreglass and rock wool insulations.

19. Materials according to claim 18, wherein the material is selected from plywood, fibreboard and particleboard.

## Patentansprüche

1. Verfahren zur Herstellung von Harnstoff-Formaldehyd-Harzen, **dadurch gekennzeichnet, dass** es umfasst:

a) einen Methylolierungsschritt, umfassend:

- Laden von Formaldehyd und, wahlweise, Wasser in einen Reaktor, der mit einem Rührwerk, einer Kühlung und einer Heizung ausgestattet ist; wobei sich Formaldehyd auf Formaldehyd, Paraformaldehyd und/oder UFC (Harnstoff-Formaldehyd-Konzentrat) oder eine Mischung daraus bezieht;
- Einstellen des pH-Werts zwischen 4,5 und 5,5;
- Hinzufügen von Harnstoff in einer solchen Menge, dass das Molverhältnis von Formaldehyd/Harnstoff zwischen 5,2 und 4,8 liegt;
- Durchführen der Methylolierungsreaktion, wobei der pH-Wert zwischen 4,5 und 5,6 aufrechterhalten wird, bei einer Temperatur zwischen 70 und 120 °C, über einen Zeitraum von zwischen 5 und 100 Minuten;

b) einen Kondensationsschritt, umfassend:

- Hinzufügen von Harnstoff zu dem Reaktor in einer solchen Menge, dass das Molverhältnis von Formaldehyd/Harnstoff in dem Reaktor zwischen 2,5 und 1,5 liegt, wobei der pH-Wert zwischen 5,0 und 5,8 eingestellt wird;
- Erhitzen auf 70-120 °C, bei einem Druckbereich von 0,05 bar bis 2,5 bar, über einen Zeitraum von zwischen 30 und 300 Minuten, um die Kondensationsreaktion durchzuführen;
- Aufzeichnen einer Kondensationskurve, Messen der Viskosität von Proben aus der Reaktionsmischung bei verschiedenen Zeitintervallen während der Kondensationsreaktion mit einem Viskosimeter bei 25 °C, bis die Viskosität entsprechend dem angestrebten Molekulargewicht erreicht ist;
- Abschluss der Kondensation durch Hinzufügen eines Alkali, um einen pH-Wert zwischen 7,1 und 8,5 zu erreichen;

c) einen finalen Harnstoff-Zugabe-Schritt, umfassend:

- Hinzufügen von weiterem Harnstoff, bei einer Temperatur von 70 bis 30 °C, über einen Zeitraum von 15 bis 120 Minuten, wobei ein pH-Wert zwischen 7,3 und 8,8 aufrechterhalten wird, um ein finales Molverhältnis von Formaldehyd/Harnstoff zwischen 3 und 0,5 zu erreichen;
- Abkühlen auf eine Temperatur unter 30 °C;

wobei der pH-Wert durch Zugabe eines Alkali oder einer Säure nach Bedarf eingestellt und unter Verwendung eines pH-Meters bestimmt wird.

**2.** Verfahren zur Herstellung von Harnstoff-Formaldehyd-Harzen nach einem von Anspruch 1, **dadurch gekennzeichnet, dass** in Kondensationsschritt b) Harnstoff in einer solchen Menge zugegeben wird, dass das Molverhältnis von Formaldehyd/Harnstoff in dem Reaktor zwischen 2,3 und 1,9 liegt.

**3.** Verfahren zur Herstellung von Harnstoff-Formaldehyd-Harzen nach einem der Ansprüche 1 und 2, **dadurch gekennzeichnet, dass** der Methylolierungsschritt a) ein Hinzufügen eines Puffers umfasst.

**4.** Verfahren nach einem der Ansprüche 1 bis 3, umfassend einen zweiten Kondensationsschritt b2), nach dem Kondensationsschritt b), umfassend:

- Hinzufügen von Harnstoff zu dem Reaktor in einer solchen Menge, dass das Molverhältnis von Formaldehyd/Harnstoff in dem Reaktor zwischen 1,8 und 1,5 liegt, wobei der pH-Wert zwischen 6,0 und 6,8 eingestellt wird;
- Erhitzen auf 70-120 °C, bei einem Druckbereich von 0,05 bar bis 2,5 bar, über einen Zeitraum von zwischen 30 und 300 Minuten, um eine zweite Kondensationsreaktion durchzuführen;
- Aufzeichnen einer Kondensationskurve, Messen der Viskosität von Proben aus der Reaktionsmischung, Messen der Viskosität von Proben aus der Reaktionsmischung bei verschiedenen Zeitintervallen während der Kondensationsreaktion mit einem Viskosimeter bei 25 °C, bis die Viskosität entsprechend dem angestrebten Molekulargewicht erreicht ist;
- Abschluss der Kondensation durch Hinzufügen von Alkali, um einen pH-Wert zwischen 7,1 und 8,5 zu erreichen.

**5.** Verfahren nach einem der Ansprüche 1 bis 4, wobei der Puffer ein Säure-Salz ist.

**6.** Verfahren nach Anspruch 5, wobei das Säure-Salz aus Natriumacetat oder Dinatriumphosphat ausgewählt ist.

**7.** Verfahren nach einem der Ansprüche 1 bis 6, wobei die Säure eine organische oder anorganische Säure mit einem

pKa-Wert von weniger als 7 ist.

**8.** Verfahren nach einem der Ansprüche 1 bis 7, wobei die Säure eine organische oder anorganische Säure mit einem pKa-Wert im Bereich von 2-5 ist.

**9.** Verfahren nach einem der Ansprüche 7 und 8, wobei die Säure aus Ameisensäure, Milchsäure, Glykolsäure, Essigsäure, Sulfamidsäure, Schwefelsäure, Salzsäure und Phosphorsäure ausgewählt ist.

**10.** Verfahren nach einem der Ansprüche 1 bis 9, wobei das Alkali eine organische oder anorganische Base mit einem pKa-Wert von mehr als 7 ist.

**11.** Verfahren nach einem der Ansprüche 1 bis 10, wobei das Alkali eine organische oder anorganische Base mit einem pKa-Wert im Bereich von 8-15 ist.

**12.** Verfahren nach einem der Ansprüche 10 und 11, wobei das Alkali aus Natriumhydroxid, Ammoniak, Monoethanolamin (MEA), Diethanolamin (DEA), Triethanolamin (TEA) und Natriumcarbonat ausgewählt ist.

**13.** Harnstoff-Formaldehyd-Harz, das durch das Verfahren nach den Ansprüchen 1 bis 12 erhalten wird.

**14.** Harnstoff-Formaldehyd-Harz nach Anspruch 13, **dadurch gekennzeichnet, dass** es umfasst:

20,0-40,0 Gew.-%, vorzugsweise 24,0-36,5 Gew.-%, Formaldehyd;
30,0-60,0 Gew.-%, vorzugsweise 33,5-55 Gew.-%, Harnstoff; und
0,00-1,00 Gew.-%, vorzugsweise 0,05-0,4 Gew.-%, Puffer.

**15.** Harnstoff-Formaldehyd-Harz nach einem der Ansprüche 13 und 14, **gekennzeichnet durch** die folgenden Merkmale:

30,0-86,0 Gew.-%, vorzugsweise 69,4-83 Gew.-% reaktive Substanz, wobei sich reaktive Substanz auf die Summe der Gewichtsprozente von reinem Harnstoff und Formaldehyd bezieht;
40-75 Gew.-%, vorzugsweise 53-65 Gew.-% Feststoffgehalt;
ein Formaldehyd/Harnstoff-Molverhältnis zwischen 3,00 und 0,50, vorzugsweise zwischen 2,10 und 0,70;
ein Formaldehyd/$NH_2$-Molverhältnis zwischen 1,50 und 0,25, vorzugsweise zwischen 1,05 und 0,35;
ein pH-Wert zwischen 6,5 und 9,5, vorzugsweise zwischen 7,5 und 8,5, wobei der pH-Wert unter Verwendung eines pH-Meters bestimmt wird.

**16.** Verwendung des Harnstoff-Formaldehyd-Harzes, wie in den Ansprüchen 13 bis 15 definiert, bei der Herstellung von Materialien, ausgewählt aus Holzverbundplatten, wie aus Holz gewonnenen Platten, Faserplatten, natürlichen und/oder synthetischen, gewebten oder nicht-gewebten Fasermatten für das Formpressen und den daraus resultierenden Verbundstoffen, Spanplatten, Pressspanplatten, Grobspanplatten, Sperrholz und Pappkartons und Glasfaser- und Steinwolleisolierungen.

**17.** Verwendung nach Anspruch 16, wobei das Material aus Sperrholz, Faserplatten und Spanplatten ausgewählt ist.

**18.** Materialien, die durch Verwendung des in den Ansprüchen 13 bis 15 definierten Harnstoff-Formaldehyd-Harzes erhalten werden, wobei die Materialien ausgewählt sind aus Holzverbundplatten, wie aus Holz gewonnenen Platten, Faserplatten, natürlichen und/oder synthetischen, gewebten oder nicht-gewebten Fasermatten für das Formpressen und den daraus resultierenden Verbundstoffen, Spanplatten, Pressspanplatten, Grobspanplatten, Sperrholz und Pappkartons und Glasfaser- und Steinwolleisolierungen.

**19.** Materialien nach Anspruch 18, wobei das Material aus Sperrholz, Faserplatten und Spanplatten ausgewählt ist.

## Revendications

**1.** Méthode de production de résines d'urée-formaldéhyde, **caractérisée en ce qu'**elle comprend :

a) une étape de méthylolation, comprenant :

- le chargement du formaldéhyde et, éventuellement, de l'eau, dans un réacteur équipé d'une agitation, d'un refroidissement et d'un chauffage ; où le formaldéhyde désigne le formaldéhyde, le paraformaldéhyde et/ou l'UFC (le concentré urée formaldéhyde), ou un mélange de ceux-ci ;
- l'ajustement du pH entre 4,5 et 5,5 ;
- l'addition d'urée, en une quantité telle que le rapport molaire du formaldéhyde/urée est compris entre 5,2 et 4,8 ;
- la réalisation de la réaction de méthylolation, le maintien du pH entre 4,5 et 5,6, à une température comprise entre 70 et 120 °C, pendant entre 5 et 100 minutes ;

b) une étape de condensation, comprenant :

- l'addition d'urée au réacteur, en une quantité telle que le rapport molaire du formaldéhyde/urée dans le réacteur est compris entre 2,5 et 1,5, l'ajustement du pH entre 5,0 et 5,8 ;
- le chauffage à 70-120 °C, dans une plage de pressions allant de 0,05 bar à 2,5 bar, pendant entre 30 et 300 minutes, pour réaliser la réaction de condensation ;
- le traçage d'une courbe de condensation, la mesure de la viscosité des échantillons provenant du mélange de réaction, à différents intervalles de temps pendant la réaction de condensation, avec un viscosimètre à 25 °C, jusqu'à ce que la viscosité correspondant au poids moléculaire visé soit atteinte ;
- la finalisation de la condensation en ajoutant un alcalin, pour obtenir un pH compris entre 7,1 et 8,5 ;

c) une étape d'addition finale d'urée, comprenant :

- l'addition complémentaire d'urée, à une température de 70 à 30 °C, pendant 15 à 120 minutes, le maintien d'un pH compris entre 7,3 et 8,8, afin d'atteindre un rapport molaire final de formaldéhyde/urée entre 3 et 0,5 ;
- le refroidissement à une température inférieure à 30 °C ;

dans laquelle le pH est ajusté en ajoutant un alcalin ou un acide comme nécessaire, et est déterminé par l'utilisation d'un pH-mètre.

**2.** Méthode de production de résines d'urée-formaldéhyde selon l'une quelconque de la revendication 1, **caractérisée en ce que**, lors de l'étape de condensation b), l'urée est ajoutée en une quantité telle que le rapport molaire du formaldéhyde/urée dans le réacteur est compris entre 2,3 et 1,9.

**3.** Méthode de production de résines d'urée-formaldéhyde selon l'une quelconque des revendications 1 et 2, **caractérisée en ce que** l'étape de méthylolation a) comprend l'addition d'un tampon.

**4.** Méthode selon l'une quelconque des revendications 1 à 3, comprenant une deuxième étape de condensation b2), après l'étape de condensation b), comprenant :

- l'addition d'urée au réacteur, en une quantité telle que le rapport molaire du formaldéhyde/urée dans le réacteur est compris entre 1,8 et 1,5, l'ajustement du pH entre 6,0 et 6,8 ;
- le chauffage à 70-120 °C, dans une plage de pressions allant de 0,05 bar à 2,5 bar, pendant entre 30 et 300 minutes, pour réaliser une deuxième réaction de condensation ;
- le traçage d'une courbe de condensation, la mesure de la viscosité des échantillons provenant du mélange de réaction, à différents intervalles de temps pendant la réaction de condensation, avec un viscosimètre à 25 °C, jusqu'à ce que la viscosité correspondant au poids moléculaire visé soit atteinte ;
- la finalisation de la condensation en ajoutant un alcalin, pour obtenir un pH compris entre 7,1 et 8,5.

**5.** Méthode selon l'une quelconque des revendications 1 à 4, dans laquelle le tampon est un sel d'acide.

**6.** Méthode selon la revendication 5, dans laquelle le sel d'acide est choisi parmi l'acétate de sodium ou le phosphate disodique.

**7.** Méthode selon l'une quelconque des revendications 1 à 6, dans laquelle l'acide est un acide organique ou inorganique ayant un pKa inférieur à 7.

**8.** Méthode selon l'une quelconque des revendications 1 à 7, dans laquelle l'acide est un acide organique ou inorganique ayant un pKa dans la plage de 2 à 5.

9. Méthode selon l'une quelconque des revendications 7 et 8, dans laquelle l'acide est choisi parmi l'acide formique, l'acide lactique, l'acide glycolique, l'acide acétique, l'acide sulfamique, l'acide sulfurique, l'acide chlorhydrique et l'acide phosphorique.

10. Méthode selon l'une quelconque des revendications 1 à 9, dans laquelle l'alcalin est une base organique ou inorganique ayant un pKa supérieur à 7.

11. Méthode selon l'une quelconque des revendications 1 à 10, dans laquelle l'alcalin est une base organique ou inorganique ayant un pKa dans la plage de 8 à 15.

12. Méthode selon l'une quelconque des revendications 10 et 11, dans laquelle l'alcalin est choisi parmi l'hydroxyde de sodium, l'ammoniac, la monoéthanolamine (MEA), la diéthanolamine (DEA), la triéthanolamine (TEA), et le carbonate de sodium.

13. Résine d'urée-formaldéhyde obtenue par la méthode selon les revendications 1 à 12.

14. Résine d'urée-formaldéhyde selon la revendication 13, **caractérisée en ce qu'**elle comprend :

20,0 à 40,0 % en poids, de préférence 24,0 à 36,5 % en poids de formaldéhyde ;
30,0 à 60,0 % en poids, de préférence 33,5 à 55 % en poids d'urée ; et
0,00 à 1,00 % en poids, de préférence 0,05 à 0,4 % en poids de tampon.

15. Résine d'urée-formaldéhyde selon l'une quelconque des revendications 13 et 14, **caractérisée par** les caractéristiques suivantes :

30,0 à 86,0 % en poids, de préférence 69,4 à 83 % en poids de matière réactive, la matière réactive désignant la somme des pourcentages en poids d'urée et de formaldéhyde purs ;
40 à 75 % en poids, de préférence 53 à 65 % en poids de teneur en matières solides ;
un rapport molaire formaldéhyde/urée compris entre 3,00 et 0,50, de préférence entre 2,10 et 0,70 ;
un rapport molaire formaldéhyde/$NH_2$ compris entre 1,50 et 0,25, de préférence entre 1,05 et 0,35 ;
un pH compris entre 6,5 et 9,5, de préférence entre 7,5 et 8,5, le pH étant déterminé grâce à l'utilisation d'un pH-mètre.

16. Utilisation de la résine d'urée-formaldéhyde définie selon les revendications 13 à 15 dans la fabrication de matériaux choisis parmi les panneaux en bois composites, tels que les panneaux dérivés de bois, les panneaux de fibres, les mats de fibres naturelles et/ou synthétiques, tissées ou non tissées pour le moulage par compression et les composites résultants, les panneaux de particules, les panneaux en aggloméré, les panneaux à copeaux orientés, le contre-plaqué et les cartons et les isolations en fibres de verre et laine de roche.

17. Utilisation selon la revendication 16, dans laquelle le matériau est choisi parmi le contre-plaqué, les panneaux de fibres et les panneaux de particules.

18. Matériaux obtenus grâce à l'utilisation de la résine d'urée-formaldéhyde définie selon les revendications 13 à 15, les matériaux étant choisis parmi les panneaux en bois composites, tels que les panneaux dérivés de bois, les panneaux de fibres, les mats de fibres naturelles et/ou synthétiques, tissées ou non tissées pour le moulage par compression et les composites résultants, les panneaux de particules, les panneaux en aggloméré, les panneaux à copeaux orientés, le contre-plaqué et les cartons et les isolations en fibres de verre et laine de roche.

19. Matériaux selon la revendication 18, le matériau étant choisi parmi le contre-plaqué, les panneaux de fibres et les panneaux de particules.

Fig. 1

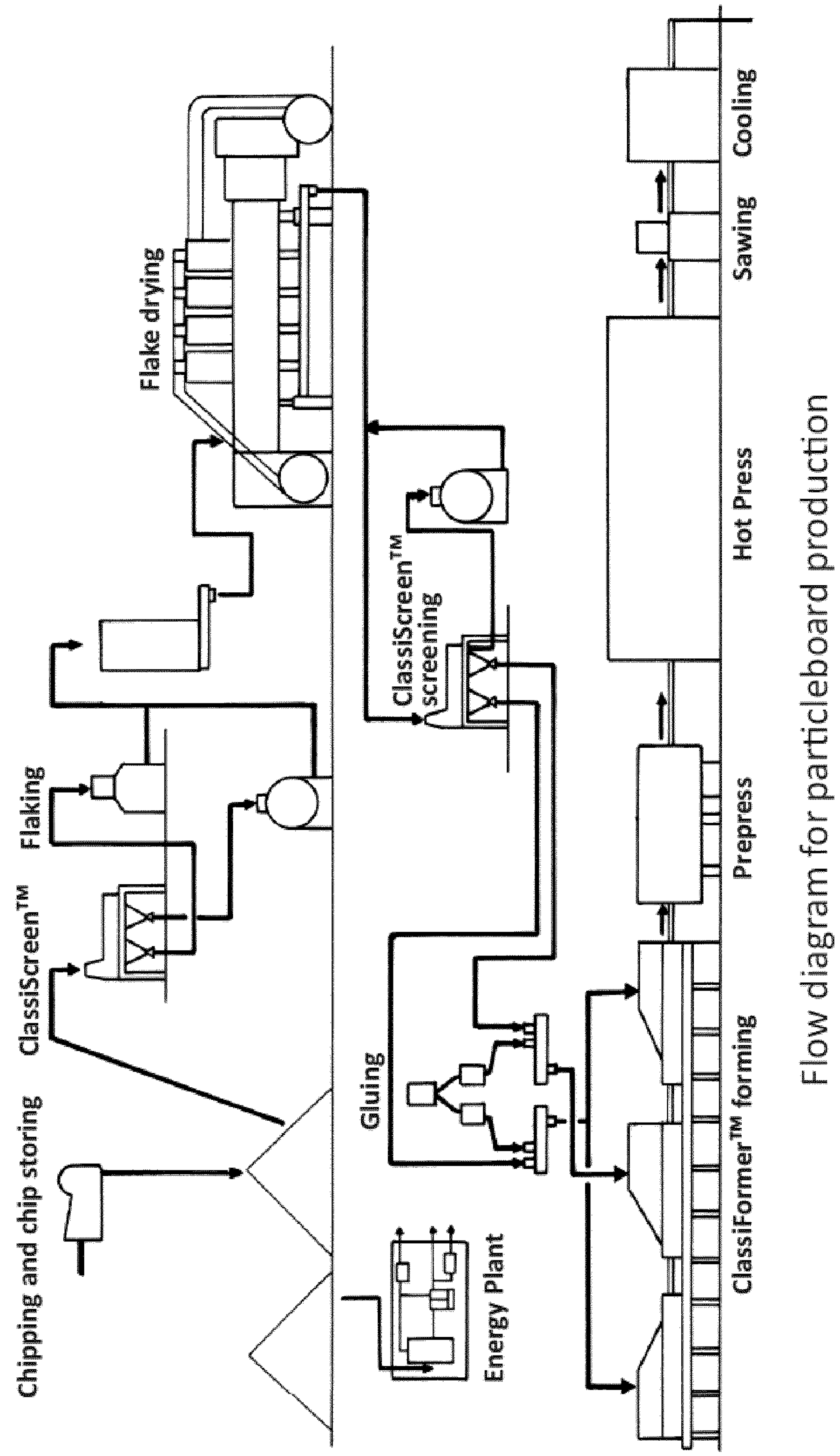
Chipping and chip storing
ClassiScreen™
Flaking
Flake drying
ClassiScreen™ screening
Gluing
Energy Plant
ClassiFormer™ forming
Prepress
Hot Press
Sawing
Cooling
Flow diagram for particleboard production

Fig. 2

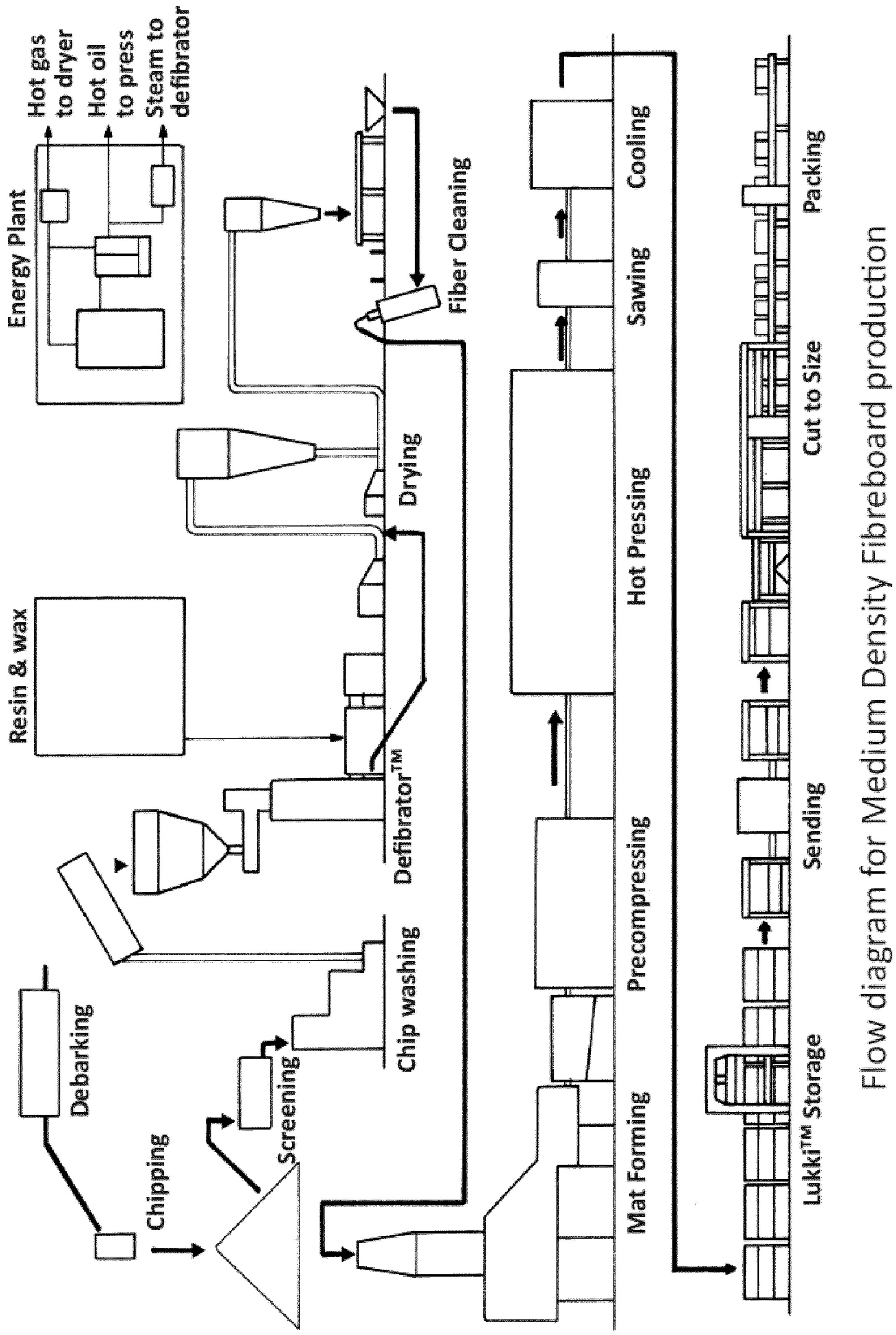
Energy Plant
Hot gas to dryer
Hot oil to press
Steam to defibrator
Resin & wax
Debarking
Chipping
Screening
Chip washing
Defibrator™
Drying
Fiber Cleaning
Mat Forming
Precompressing
Hot Pressing
Sawing
Cooling
Lukki™ Storage
Sending
Cut to Size
Packing
Flow diagram for Medium Density Fibreboard production

Fig. 3

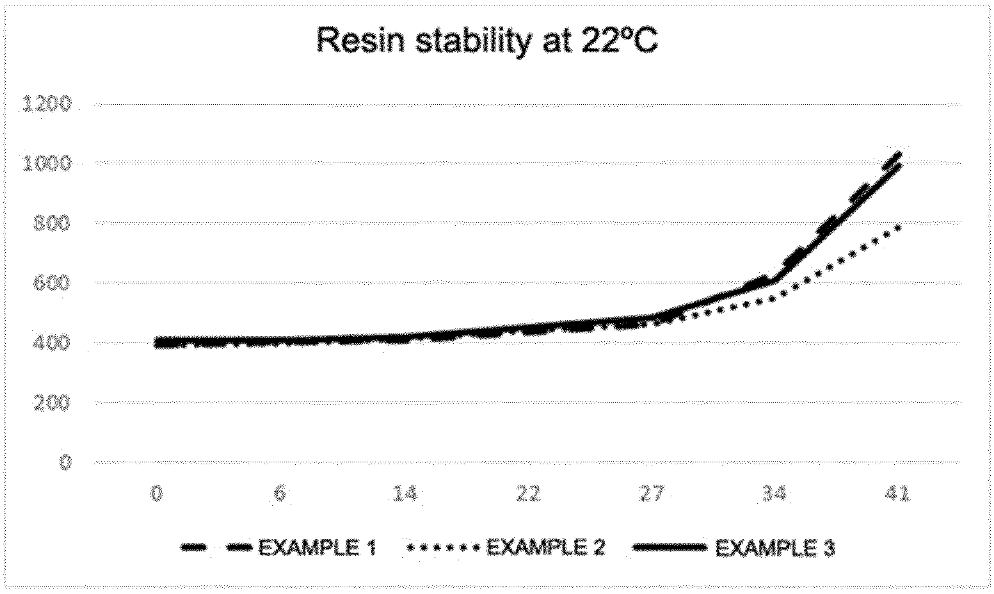
Resin stability at 22ºC
1200
1000
800
600
400
200
0
0
6
14
22
27
34
41
EXAMPLE 1
EXAMPLE 2
EXAMPLE 3

Fig. 4

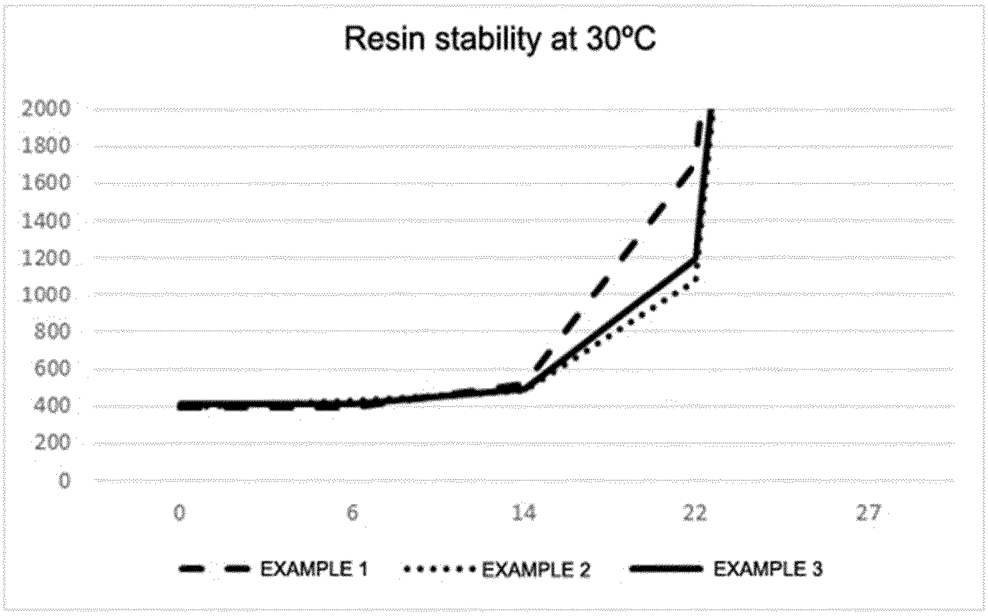
Resin stability at 30ºC
2000
1800
1600
1400
1200
1000
800
600
400
200
0
0
6
14
22
27
EXAMPLE 1
EXAMPLE 2
EXAMPLE 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009065771 A
- US 20120115994 A
- US 5684118 A
- WO 2007138364 A1
- US 3816376 A
- WO 2009080798 A1
- WO 2014150267 A1
- US 2009171062 A1
- US 20020004554 A1
- US 20120115994 A1


### Non-patent literature cited in the description


- *Wood Adhesives Chemistry and Technology*, 1983, vol. 1, 1-58, 59-104
- Handbook of Adhesive Technology. Taylor & Francis Group, LLC, 2003
- **NURYAWAN, ARIF et al.** Penetration of urea-formaldehyde resins with different formaldehyde/urea mole ratios into softwood tissues. *Wood Science and Technology*, 2014, vol. 48 (5), 889-902
- **FERRA, JOAO et al.** Comparison of UF synthesis by alkaline-acid and strongly acid processes. *Journal of Applied Polymer Science*, 2012, vol. 123 (3), 1764-1772
- **GONCALVES, CAROLINA et al.** Impact of the Synthesis Procedure on Urea-Formaldehyde Resins Prepared by Alkaline-Acid Process. *Industrial & Engineering Chemistry Research*, 2019, vol. 58 (14), 5665-5676
- **THOEMEN et al.** Source: ''Wood-Based Panels, An Introduction for Specialists. Brunel University Press, 2010, 5-47
- **THOEMEN et al.** Source: ''Wood-Based Panels, An Introduction for Specialists. Brunel University Press, 2010, 61-73
- **THOEMEN et al.** Wood-Based Panels, An Introduction for Specialists. Brunel University Press, 2010, 5-47
- **THOEMEN et al.** Wood-Based Panels, An Introduction for Specialists. Brunel University Press, 2010, 61-73